Europäisches Patentamt

(19) ))) European Patent Office

Office européen des brevets

(11) Publication number: **0 010 071**
**A2**

(12) **EUROPEAN PATENT APPLICATION**

(21) Application number: **79830027.3**

(22) Date of filing: **31.08.79**

(51) Int. Cl.³: **G 01 N 15/07**

(30) Priority: **07.09.78 IT 8345778**

(43) Date of publication of application:
**16.04.80 Bulletin 80/8**

(84) Designated Contracting States:
**AT BE CH DE FR GB LU NL SE**

(71) Applicant: **SALUS ISTITUTO DIAGNOSTICO DI CROCE'**
**DR.FRANCESCO & C. s.a.s.**
**n.71 Viale Ungheria**
**I-33100 Udine(IT)**

(72) Inventor: **Breda, Enzo**
**n.34 Via Pradattimis**
**I-33100 Udine(IT)**

(72) Inventor: **Ciotti, Alfredo**
**n.60 Piazzale Chiavris**
**I-33100 Udine(IT)**

(74) Representative: **D'Agostini, Giovanni, Dr.**
**n. 17 via G.Giusti**
**I-33100 Udine(IT)**

(54) **An apparatus for the automatic determination in percentage of the volume of particles in suspension in a liquid.**

(57) An apparatus (B) for the automatic determination in percent of the volume of particles in suspension in a liquid,
adaptable to be used in connection with other apparatuses (A,
C) for measuring the volume of said particles during their
passage through means for detecting and counting signals
and converting the signals into electrical impulses or adaptable to be integrated with other apparatuses, which com-
prises: connection means for receiving said electrical
impulses (1,2), filtering means and means for classifying said
electrical impulses (3), memory and elaborating totalizer
means of said electrical impulses (5, 6) connected with exit
means (8,11,12) of illustration or visualization of the data like
that elaborated.

./...

FIG.1

- 1 -

An apparatus for the automatic determination in percentage of
the volume of particles in suspension in a liquid.

The present invention relates to apparatuses for the automatic
determination of the percentage of the volume of particles in
suspension in a liquid. More specifically the apparatus of the
present·invention relates to a determination and/or a measure
and/or a detection of homogenous groupings in a determined fi
eld of particles in suspension in a liquid.

A very specific and convenient application of the apparatus
of the present invention is in the volumetric determination of
blood corpuscles which are in an aqueos suspension with additi
ves and more specifically of the red corpuscles.

It is well know for instance, that in the specific case of
blood diagnosis, the laboratories which are equipped to make
such determinations, have available some apparatuses which
are capable of measuring predetermined parameters of red cor
puscles which are placed in aqueos solution in a small contai
ner containing a suitable additive.
These parameters essentially consist of the following:
- a numerical calculation with reference to a predetermined
unit of volume, for instance $mm^3$, that is the number of red
corpuscles in a specified volume;
- The average volume of the corpuscles which have been calcu

lated, that is the volume obtained from the sum of the volu mes of the small corpuscles, that is the corpuscles which ha ve been computed divided by the number of the corpuscles whi ch have been computed. This is the arithmetical average.

- The total volume of the corpuscles in percentage of the to tal volume of the blood being analyzed. The device which is ordinarily used for this determination is the hematocrit. These results or parameters are essentially obtained with two types of apparatuses:

- The first type is an apparatus functioning electrostatical ly, which utilizes a laser beam and which measures the diffu sion of light at a fixed angle of 15°- 30°, which apparatus converts the optical signal based on the source of light into an electronic impulse which has a definite duration and a de finite amplitude, the latter being the height of the signal on a screen, so that this amplitude results proportional to the volume of every blood corpuscle being analyzed.

- The second type consists of an electrical apparatus which determines variations in the electrical resistance or capaci ty due to the passage of the same corpuscles in an aqueous suspension. Also in this apparatus these variations of resis tance and/or capacity cause electric signals to be emanated, which signals are characterized by an amplitude and a durati on as with the preceding type of apparatuses.

All these types of apparatuses present the drawback that they do not give accurate results, particulary in the case when im purities are present in the environment and when impurities are present in the solution which are computed as if they we re corpuscles.

A further drawback of the well know apparatuses resides in the fact that the coincidence of signals due, for instance, to the passage of corpuscles which are close or one next to the other, generates a signal which is not representative of a single corpuscle and therefore the results are incorrect. In view of these drawbacks, in order to obtain more accurate results, it is necessary to repeat the analysis several times, keeping in mind that even in this manner there is no guarantee that the results will exactly correspond to the true values.

An object of the present invention is to eliminate the drawbacks mentioned hereinabove.

Another object of the present invention is to provide a novel apparatus connectable to the prior art apparatus which determines the volume of the small particles or globules only in the real environment, that is excluding the instances of abnormal detection, for instance due to globules being one next to the other.

Still another object of the present invention is to provide the percentages of the corpuscles present at different levels of volume as it will be illustrated more clearly hereinbelow.

It is well know that red corpuscles have a volume which varies generally for each individual corpuscle between 50 and $200\mu^3$ and the apparatuses know in the art give an average value of measure, for instance $V_m = 87\mu^3$ determined on the basis of the following formula:

$$Vm = \frac{V}{n}$$

in which V is the total volume of the particles being computed and n is the total number of particles being computed.

It is evident that, when a great number of small particles close one to the other or even adjacent one to the other goes through, there is an error in the computation with respect to the value of the volume of v because v is the volume of a single computation and therefore an error also in the value of V which is equal to $v_1 + v_2 + v_3 + \ldots v_n$. This obviously causes inaccuracies in the results as it has been mentioned hereinabove.

With the apparatus of the present invention it is possible to eliminate these anomalous data, which data are considered anomalous either because of the duration of the signal or because of the amplitude of the signal itself, that is the height of the impulse, for instance on the screen.

By utilizing these data which are freed of anomalous data, it is possible to established a percentage distribution of the corpuscles within a certain number of pre-established volume levels.

By way of example, in the field mentioned hereinabove, it has been found convenient to divide the entire field in nine levels. In this manner considering the field limited between values $50 - 194 \mu^3$, one will have

$$194 - 50 = 144 \mu^3$$
$$144 : 9 = 16 \mu^3$$

of field for each so that one will have the following level distribution: $50 - 66 \mu^3$ ; $66 - 82 \mu^3$; $82 - 98 \mu^3$; $98 - 114 \mu^3$; $114 - 130 \mu^3$; $144 - 130 \mu^3$; $130 - 146 \mu^3$; $146 - 162 \mu^3$; $162 - 178 \mu^3$; $178 - 194 \mu^3$.

Naturally depending upon the specific requirements, the levels may be differenciated in a manner other than the extension of equal field as described hereinabove.

The apparatus according to the present invention is so constructed that it permits to draw in progression, to recognize and classify in a simple manner the data measured in the several levels and it permits to totalize these data because it supplies the data in the following three forms:

1) a digital (numerical) presentation of the percentages for

0010071

each level in a sequential automatic or manual manner;

2) printing of the data by means of a alphanumerical printer;

3) recordal of the graph on a screen and/or on paper.

This results is schieved by means of an apparatus which is used in conjunction with existing apparatuses.

According to one embodiment of the invention, it is also possible to build a single complex apparatus which is integrated with the apparatuses know in the art.

The apparatus according to the present invention essentially consists of the following:

- a connector which withdraws electric signals which represent the amplitude (height), duration of the impulse and number, red corpuscles which are being analyzed as well as the signal of initial computation and of the end of the computation, the relative details of the apparatuses know in the art , hereinafter  referred to as pre-existing apparatuses are not mentioned;

- a filter which leaves out the impulses which represent anomalous properties such as the duration and the height outside of a predetermined field pre-established by the operator;

- the discriminant of the height which conveys in each single field of level the impulses falling within the same field and conveys them separately;

- partial accumulators or partial memories, one for each pre-established field, for instance nine memories in the case illustrated hereinabove;

- an elaborating totalizer  of the partial memories connected with the memories, which with a total pre-established number of the corpuscles being analyzed, blocks the analysis of the signals and proceeds with the elaboration of the data and with the emission of the same data;

- a sequensor which transfer the signals from the elaborating totalizer and from the partial memories onto means of perception of the same, for instance visual means (numerical or digital, analogical, in the form of graphs which may be written and/or visualized on a screen).

The structural features of the apparatus of the present invention mentioned hereinabove will be better understood and others will appear more clear from the following detailed description of one example by reference to the attached drawings of which in particular:

- Fig. 1 is a diagram which provides a schematic representation in blocks of the apparatus according to the present invention;

- Fig. 2 is a graphic representation of one first result of analysis;

- Fig. 3 is a second graphic representation of a second analysis;

- Fig. 4 is a third graphic representation of another analysis.

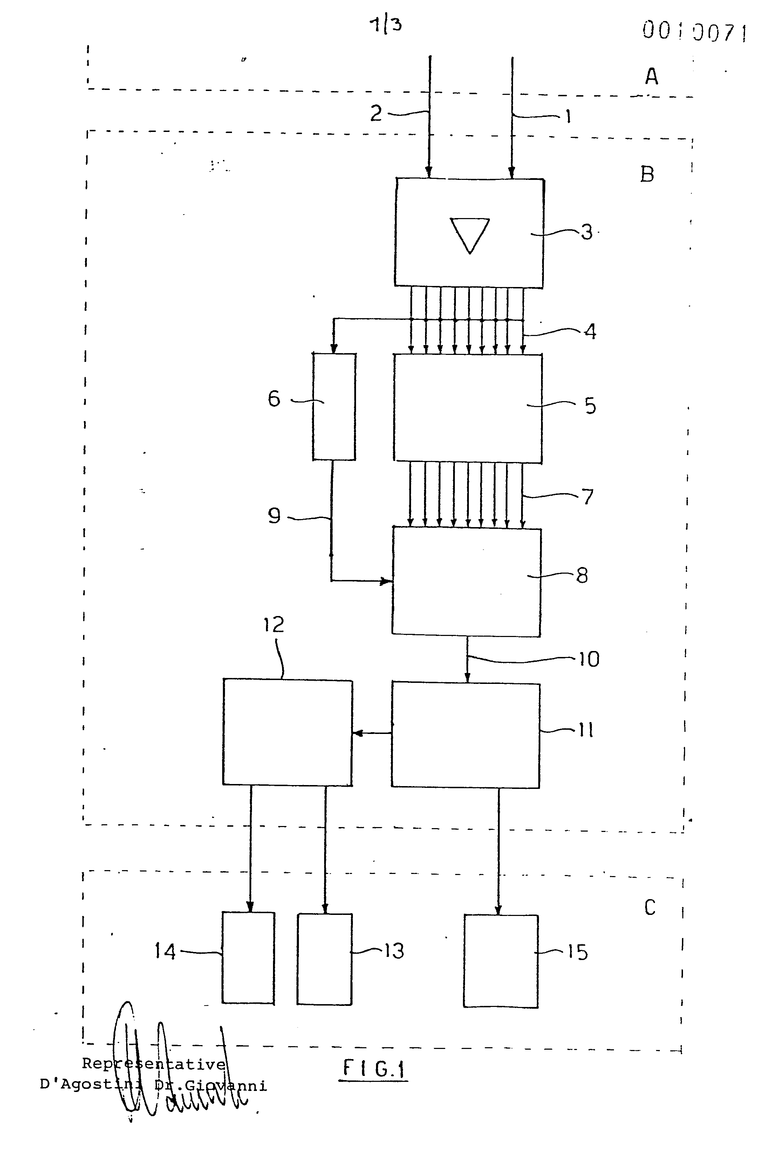

As show in Fig. 1, the pre-existing apparatuses of analysis of the corpuscles according to the present invention are represented by the letter A. The letter B represents the apparatus according to the present invention and the letter C represents the apparatuses which present the data. All these apparatuses are represented in the figure enclosed in the dotted lines. The groups of apparatuses at the beginning and at the end, that is A and C are not described in detail because they are well know in the art.

The apparatus B according to the present invention is substantially constituted by the following parts:

- means for connecting apparatus A and specifically a conduct

- 7 -

0010071

or of electrical impulses which represent the properties of the corpuscles being analyzed transmitted by the pre-existing apparatuses, which conductor is designated by numeral 1. Numeral 2 designates a conductor which transmits the impulse from the start of the examination, also transmitted by the same pre-existing apparatuses;

- Numeral 3 designates a filter of anomalous impulses transmitted by conductor 1, which is provided with a discriminant of the level. This discriminant transmits the impulses in accordance with a pre-established number of levels onto conductors 4. In the specific case illustrated hereinabove nine conductors 4 are used;

- a group of partial memories designated by numeral 5 for the storage of the various impulses differenciated in each field of level received from the conductor 4;

- an elaborating totalizer 6 connected to conductors 4;

- a sequensor 8 for alternate presentation of the data by means of exit conductor 10 for each field of level, connected to the partial memories with conductors 7 and with the elaborating totalizer by means of conductor 9;

- a digital monitor 11 which is numerical and/or alphanumerical and which converts the data transmitted by the sequensor and which is connectable with an alphanumerical printer for printing the data and which is further connected with

- a digital analogical converter 12 which elaborates the data and converts them in an analogical form because it is provided with means for the transmittal and connection with an apparatus for the representation of the data which have been elaborated in the form of graphs on paper or on a monitor. The latter is represented in the block figure by numerals 13 and 14 while the printer is represented by numeral 15.

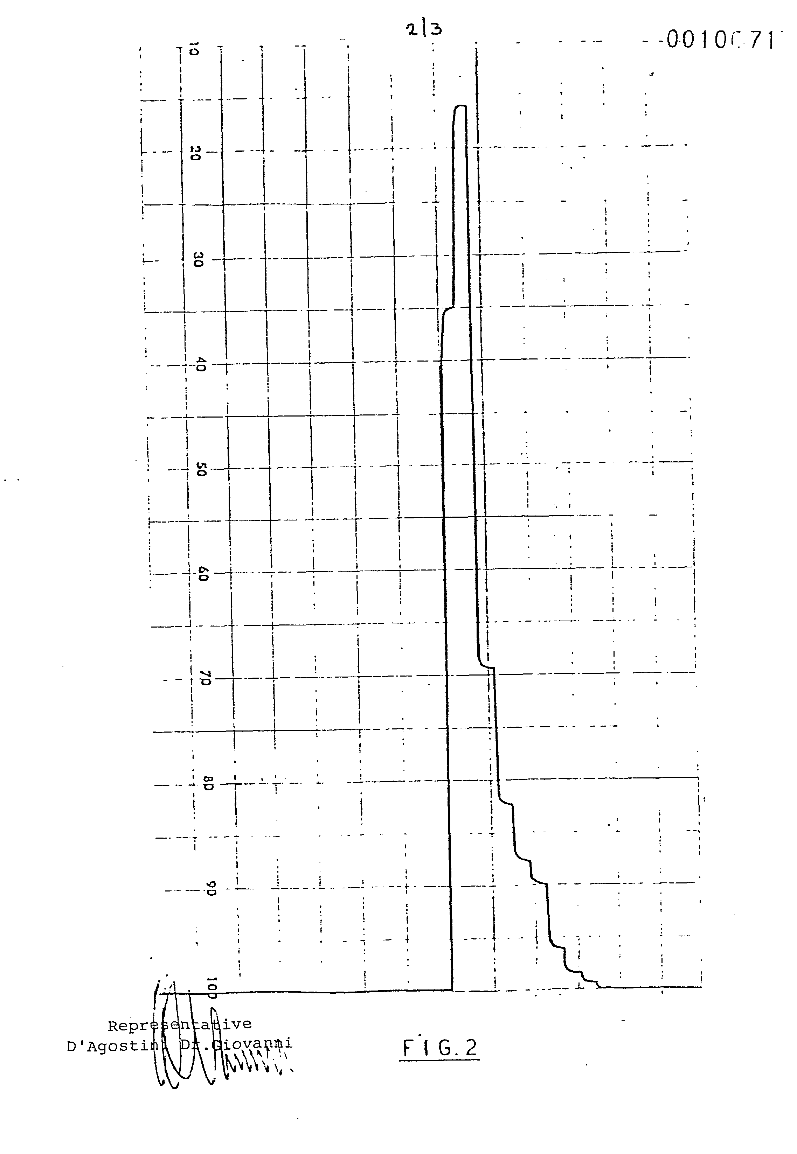

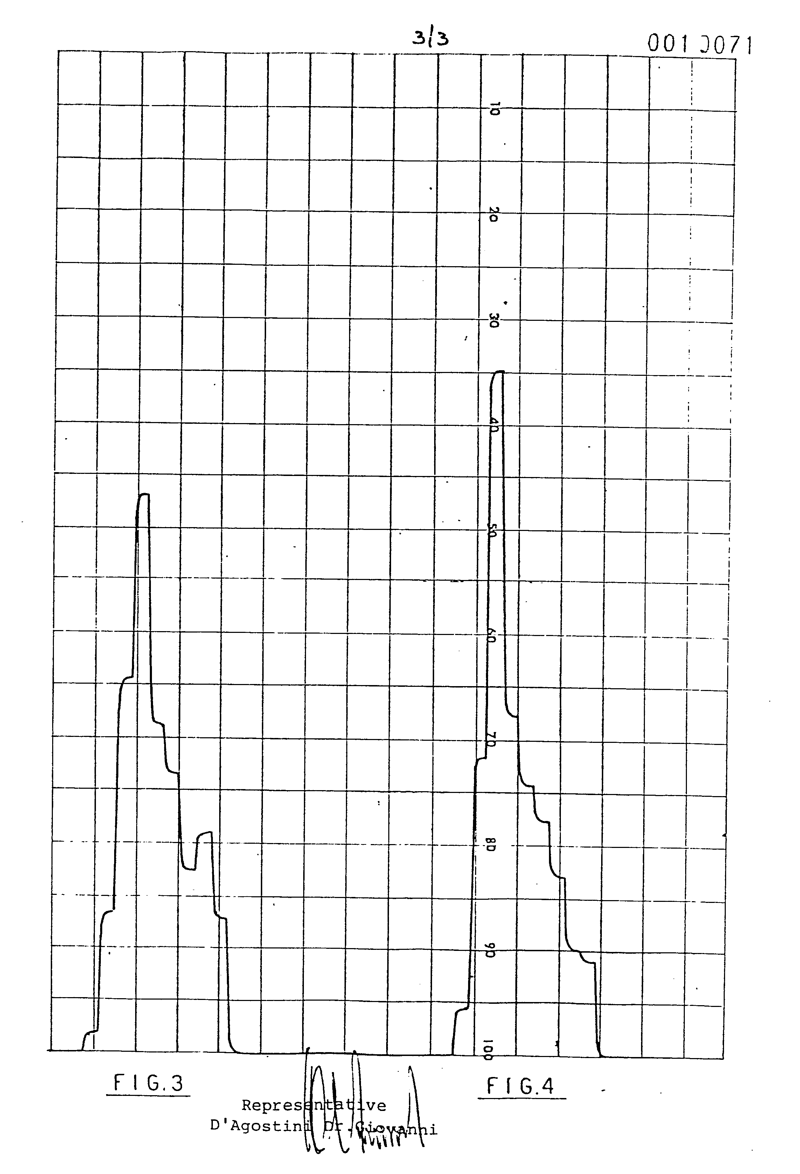

Figures 2, 3 and 4 respectively represent three graphs (histo grams) of three different analysis. Specifically, Figure 2 re presents a case of microcytosis with the maximum being at the second level; Figure 3 represent a case of hemolytic jaundice with the maximum being at the fourth level and the last two are higher than normal. The third analysis which is shown in Figure 4 represents the results of the examination of normal blood with the maximum at the third level. In the diagrams of Figures 2, 3 and 4, it is clear that there are represented the properties of volumetric distribution of the red cor puscles in percent. The percentage in analogical form is re presented on the ordinate and the various levels with referen ce to the several steps are represented on the abscissa.

Naturally the details of execution of the apparatus according to the present invention may be varied without departing from the essential features as described hereinabove and as illus trated in the accompanying drawings.

Representative
D'Agostini Dr.Giovanni

Claims:

1. An apparatus for the automatic determination in percent of the volume of particles in suspension in a liquid, adaptable to be used in connection with other apparatuses for measuring the volume of said particles during their passage through means for detecting and counting signals and converting the signals into electrical impulses or adaptable to be integrated with other apparatuses, which comprises:

- first coduit means with said apparatus capable of measuring the volume of the particles, said conduit means receiving said electrical impulses;

- filtering means for said electrical impulses connected with said conduit means, capable of filtering the electrical impulses which previously are classified as anomalous with respect to the amplitude and/or the duration of said electric impulses;

- means for classifying said electrical impulses into a series of predetermined fields of intensity of the impulses wich represent the level and for classifying the volume of the particles whereby the series of electrical impulses bein analyzed is grouped in a pre-established series of homogenous fields previously programmed and predisposed by second conduit means;

- memory means for the properties of said impulses in each of said fields which memory fields are partial memories and are connected to said second conduit means;

- elaborating totalizer of said electric impulses which have gone through said memory means of each specific field, said elaborating totalizer being connected to said second conduit means;

- exit means and a means of illustration and visualization of the data capable of representing the properties of volume and number of said particles for each pre-established field in the different levels.

2. The apparatus according to claim 1 wherein said means of illustration consists of a sequensor which is connected to said partial memories and to said elaborating totalizer for the purpose of sequentially emanating the elaborated data in each pre-established field.

3. The apparatus according to claim 1 wherein said exit means is connected to a digital monitor for the conversion of the data into at least one of numerical and alphanumerical data.

4. The apparatus according to claim 1 which is provided with an analogical converter for the conversion of said numerical or alphanumerical data into signals capable of activating graphic visualizing means.

5. The apparatus according to claim 1 which is connected to a printing machine for printing said elaborated data transmitted at the exit of said apparatus.

6. The apparatus according to claim 1 which is provided with means for translating said electrical impulses thus elaborated and counted into histograms and the properties of said particles may be draw in said histograms in Gaussian form for grouping in various levels whereby the percentage is represented on the ordinate in analogical form of the particles being analyzed and the said levels in each field are represented on the abscissa, said levels representing the volume of the particles being analyzed or vice-versa.

0010071

7. The apparatus according to claim 1 which is adapte for the analysis of blood and the particles being analyzed are blood corpuscles being suspended in a liquid.

8. The apparatus according to preceeding claims as described and illustrate for the specifieds objects.

Udine, 24th September 1979

Representative
D'Agostini Dr. Giovanni

A

2 ⟍  1 ⟍

B

▽  3

4

6  5

9  7

8

12  10

11

C

14  13  15

<u>F I G.1</u>

FIG.2

Representative
D'Agostini Dr. Giovanni

0010071

FIG.3

FIG.4

Representative
D'Agostini Dr. Giovanni